# EUROPÄISCHE PATENTSCHRIFT

(11) **EP 1 050 992 B1**
(45) Veröffentlichungstag und Bekanntmachung des Hinweises auf die Patenterteilung: **06.12.2006**
(21) Anmeldenummer: 99108960.8
(22) Anmeldetag: 06.05.1999
(51) Int. Cl.: H04L 9/30, G07F 7/10

(54) **Verfahren zur Verschlüsselung von Daten**
Data encryption method
Procédé de chiffrage de données

(43) Veröffentlichungstag der Anmeldung: 08.11.2000
(73) Patentinhaber: ITC&C Susanne Jacob, 4056 Basel (CH)
(72) Erfinder: Jacob, Hansjörg K., 4056 Basel (CH)

(56) Entgegenhaltungen:
- EP-A- 0 797 329
- MAMBO M ET AL: "PROXY CRYPTOSYSTEMS: DELEGATION OF THE POWER TO DECRYPT CIPHERTEXTS" IEICE TRANSACTIONS ON FUNDAMENTALS OF ELECTRONICS, COMMUNICATIONS AND COMPUTER SCIENCES, Bd. E80-A, Nr. 1, 1. Januar 1997 (1997-01-01), Seiten 54-63, XP000742245 ISSN: 0916-8508

## Beschreibung

Die Erfindung bezieht sich auf ein Verfahren zur Verschlüsselung von Daten.

Es ist bekannt, dass sogenannte e-Mails, auf elektronischem Weg verschickte Botschaften, kaum Schutz gegen Lauscher bieten. Man versucht daher die Botschaft zu verschlüsseln, so dass nur der rechtmässige Empfänger den Inhalt lesen kann. Schnellere und billigere Computer sowie leistungsstarke Algorithmen haben seit den achtziger Jahren geeignete Systeme allgemein zugänglich gemacht.

Bis etwa Mitte der siebziger Jahre besass der US-Geheimdienst, die National Security Agency (NSA), praktisch ein Monopol an der amerikanischen Verschlüsselungstechnologie. Das änderte sich 1976, als Whitfield Diffie und Martin E. Hellman von der Universität Stanford (Kalifornien) zum ersten Mal das Verfahren der Public-Key-Kryptographie publizierten (im Deutschen spricht man von Kryptosystemen mit veröffentlichtem Schlüssel beziehungsweise von asymmetrischen Schlüsselsystemen). Bis zu dieser Veröffentlichung diente ein einziger Schlüssel zum Ver- und Entschlüsseln von Nachrichten. Solche symmetrisch genannten Systeme können nur funktionieren, wenn der Schlüssel über einen sicheren Kanal übertragen wird, was das Verfahren oft unhandlich werden lässt. Wenn man ihn jedoch sicher übertragen kann, wieso dann nicht gleich die Nachricht selbst?

Public-Key-Kryptographie arbeitet asymmetrisch, ohne das Transferieren von Schlüsseln zu erfordern. Benötigt werden statt dessen zwei verschiedene, aber zueinander komplementäre Schlüssel. Jeder Schlüssel entziffert die Nachricht, die der jeweils andere komplementäre Schlüssel codiert hat, kann aber sein eigenes Werk nicht selbst wieder rückverwandeln. Demnach darf der Besitzer einen davon ohne Bedenken publik machen (public key), während er den anderen geheimhalten muss (private key).

Asymmetrische Kryptographie nutzt die Tatsache, dass sich manche mathematische Funktionen in einer Richtung recht einfach berechnen lassen, während ihre Umkehrung unlösbar ist. Die zwei Hauptvertreter sind der Diffie-Hellmann-Algorithmus mit seinen Varianten und das RSA-Chiffriersystem, entwickelt am Massachusetts Institute of Technology in Cambridge. Die erste Methode nutzt, dass die Berechnung diskreter Logarithmen schwer ist. Das RSA-Chiffriersystem beruht auf der Schwierigkeit der Primzahlzerlegung. Es ist einfach, zwei grosse Primzahlen miteinander zu multiplizieren, aber sehr schwierig, das Produkt wieder in seine Faktoren zu zerlegen.

Eine weitere Anwendung asymmetrischer Kryptographie ist der Nachweis der Echtheit der Nachrichten. Wenn der B dem A eine Nachricht sendet, verschlüsselt er sie zuerst mit seinem persönlichen und danach noch einmal mit A's offenem Schlüssel. Der A verfährt umgekehrt: Er entschlüselt die Nachricht zuerst mit seinem persönlichen Schlüssel und dann noch einmal mit B's offenem Schlüssel. Wenn der dechiffrierte Text lesbar ist, muss er von B stammen. Ein Entschlüsselungsverfahren unter Verwendung eines Schlüsseldients ("proxy decryptor") ist beispielsweise in folgender Druckschrift beschrieben:
Mambo M. et al.: "Proxy cryptosystems: Delegation of the power to decrypt ciphertexts", IEICE Transactions on fundamentals of electronics, communications and computers sciences, Bd. E80-A, Nr. 1, 1. Januar 1997 (1997-01-01), Seiten 54-63, XP000742245, ISSN: 0916-8508

Doch leider hat die Kryptologie mit öffentlichen Schlüsseln zwei Nachteile: Sie ist zeitaufwendig für längere Botschaften und der Chiffrierprozess lässt manchmal Regelmässigkeiten im Text unverändert, was den Code leichter zu knacken macht.

Allerdings bieten auch diese Codierungsmethoden keinen absoluten Schutz gegen eine Dechiffrierung. So dechiffrierte ein speziell konstruierter Parallelrechner der Electronic Foundation in San Francisco eine DES-Botschaft, indem er innerhalb einer Woche alle denkbaren 56-Bit-Schlüssel durchprobierte. Auch das Public-Key-System lässt sich austesten, etwa durch Chiffrieren spezieller Texte mit dem offenen Schlüssel und Analyse der Ergebnisse.

Darüber hinaus benötigt jeder Beteiligte einen privaten Schlüssel, den er geheimhalten muss, was mit einem entsprechenden Merkaufwand verbunden ist.

Der Erfindung liegt daher das Problem zugrunde, ein Codierungsverfahren zur Verfügung zu stellen, das eine höhere Sicherheit bietet sowie den Aufwand für die Codierung für die Beteiligten verringert.

Die Erfindung löst diese Aufgabe durch die Einschaltung einer dritten Partei C, die den von der Partei A an die Partei B übermittelten Daten oder auch direkt an die Partei C gerichteten Daten einen privaten Schlüssel zuordnet, aus dem wiederum ein komplementärer öffentlicher Schlüssel berechnet wird. Der öffentliche Schlüssel wird beispielsweise per Datennetz der Partei A zugestellt, die damit nun ihre an die Partei B oder an die Partei C gerichteten Botschaften codiert. Die Partei B selbst kann jedoch die Botschaft nicht decodieren, da sie keinen Zugriff auf den privaten Schlüssel hat. Die Partei B sendet nun die codierte Botschaft an die dritte Partei C, die die mit dem öffentlichen Schlüssel codierte Botschaft wieder entschlüsselt und die nunmehr entschlüsselte Botschaft an die Partei B zurücksendet. Durch die dritte Partei C ist die Partei B durch Ver- und Entschlüsselungsprozesse nicht belastet und sie kann doch sicher sein, dass sie tatsächlich mit der richtigen Partei A kommuniziert oder Geschäfte tätigt, da nur die von dieser Partei A ausgehenden Daten entschlüsselt werden können.

Insbesondere für Verkäufe auf elektronischem Weg wie zum Beispiel über das Internet ist diese Art der Verschlüsselung geeignet, um das erforderliche Vertrauen zwischen dem Käufer und dem Verkäufer herzustellen. So kann zum Beispiel sichergestellt werden, dass der Verkäufer es tatsächlich mit der Person oder Institution zu tun hat, die sich als Partei A ausgibt. Einem Missbrauch durch einen Dritten, der sich als Partei A ausgibt, um auf Kosten der Partei A Geschäfte zu tätigen, ist damit vorgebeugt. So kann beispielsweise bei der ersten Aktion die Partei A ihren Namen und ihre Kreditkartennummer angeben. Um die Sicherheit zu erhöhen, kann diese erste Aktion nicht über die Partei B abgewickelt werden, sondern die Partei A tritt direkt mit der Partei C in Verbindung, die der Kreditkartennummer in Verbindung mit dem Namen des A einen privaten Schlüssel zuordnet, der wiederum einen öffentlichen Schlüssel generiert. Der öffentliche Schlüssel wird der Partei A zugestellt, die damit zukünfig ihre Kreditkartennummer verschlüsselt, so dass nur noch die verschlüsselte Kreditkartennummer über das Netz verschickt wird. Die Partei B, die diese verschlüsselte Kreditkartennummer erhält, entschlüsselt sie jedoch nun nicht, sondern leitet sie an die Partei C weiter. Die Partei C kennt den privaten Schlüssel zur Dechiffrierung der verschlüsselten Kreditkartennummer und sendet nach der Entschlüsselung die entschlüsselte Nummer an die Partei B, die nun sicher sein kann, es tatsächlich mit der Person A zu tun zu haben, da nur diese über den öffentlichen Schlüssel, der zu dem privaten Schlüssel korrespondiert, verfügt.

Um die Sicherheit zu erhöhen, kann jedoch zusätzlich nach jeder Transaktion der Partei A von der Partei C ein neuer privater Schlüssel zugeordnet werden, der dann einen öffentlichen Schlüssel generiert. Auch wenn ein ungebetener Lauscher den öffentlichen Schlüssel errät, so nutzt ihm dies für die nachfolgende Transaktion nichts, da dann bereits ein anderer öffentlicher Schlüssel für das Verschicken der Botschaft verwendet wird.

Eine Dechiffrierung von Nachrichten ist nur durch Manipulationen der Partei C möglich, so dass sichergestellt werden muss, dass es sich hier um eine absolut vertrauenswürdige Institution handelt. Dies ist jedoch eine politische und keine technische Frage.

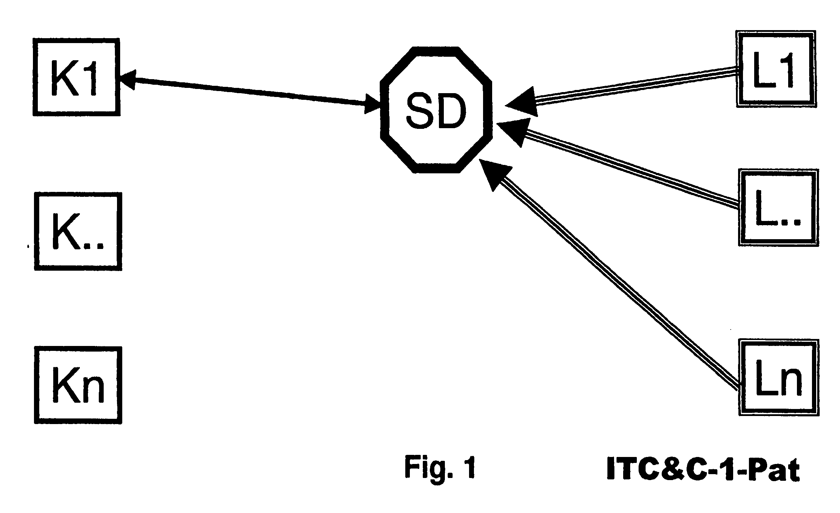

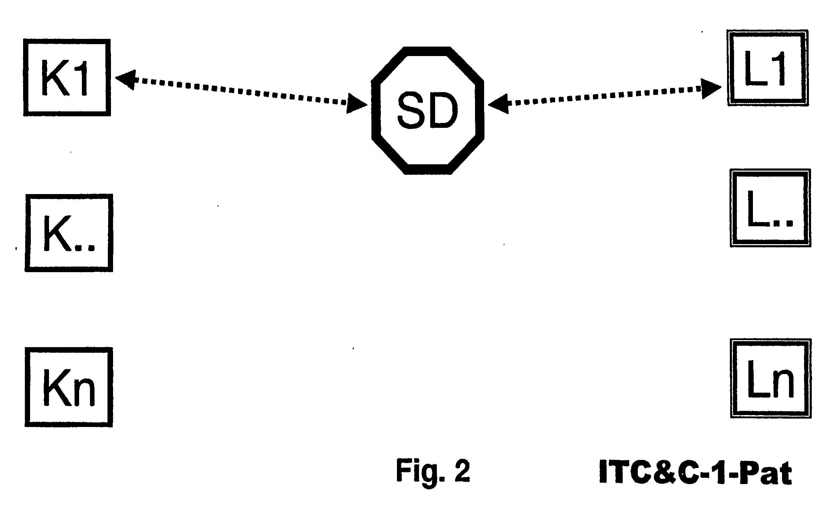

Weitere Einzelheiten und Vorteile der Erfindung ergeben sich aus der nachfolgenden Beschreibung und der Zeichnung. In der Zeichnung zeigen die Figuren 1 und 2 eine schematische Darstellung eines Ausführungsbeispiels der Erfindung anhand von Transaktionen zwischen Kunden und Lieferanten:
- Fig.1:: schematische Darstellung der Verbindung zwischen einem Kunden und einem Schlüsseldienst;
- Fig.2:: schematische Darstellung der Verbindung zwischen einem Kunden und einem Lieferanten.

Das in den Fig. 1 und 2 schematisch dargestellte Ausführungsbeispiel veranschaulicht, wie die Erfindung insbesondere für Verkäufe auf elektronischem Weg wie zum Beispiel über das Internet genutzt werden kann, um das erforderliche Vertrauen zwischen dem Käufer und dem Verkäufer sicherzustellen. Zu Beginn einer Transaktion zwischen Kunden und Lieferanten, wendet sich zweckmässigerweise ein potentieller Kunde K1 (Partei A) an einen Schlüsseldienst SD (Partei C) und meldet sich dort mit seinem Namen an. Es ist darüber hinaus vorteilhafterweise möglich, dass die potentiellen Lieferanten (Partei B) nur über den Schlüsseldienst erreichbar sind, so dass eine direkte Kontaktaufnahme zwischen den Kunden K und den Lieferanten L nicht möglich ist. Damit der Kunde K1 erfährt, mit welchen Lieferanten L er über den Schlüsseldienst SD in Kontakt treten kann, ist es insbesondere zweckmässig, dass der Kunde K1 zunächst völlig unverbindlich ohne Nennung seines Namens sich über das Angebot des Schlüsseldienstes SD informieren kann. Allerdings ist es im Rahmen der Erfindung auch denkbar, dass der Kunde K1 zunächst an den Lieferanten L1 herantritt und dieser ihn auf den Schlüsseldienst SD verweist und ihm erläutert, dass nur unter Einbeziehung des Schlüsseldienstes SD es möglich ist, mit ihm, dem Lieferanten L1, ein Geschäft zu tätigen.

Nach der Meldung des Namens von K1 sucht der Schlüsseldienst SD in seiner internen Datenbank, ob ihm dieser Name bereits bekannt ist. Ist dies nicht der Fall, so kreiert der Schlüsseldienst SD vorteilhafterweise zunächst einen Identifikationscode IC, den er dem K1 zweckmässigerweise nicht auf elektronischem Weg, sondern per Post zustellt, und trägt darüber hinaus K1 mit dem Identifikationscode in seine Datenbank ein. Insbesondere kann vorgesehen sein, dass vor der Eintragung des K1 in die Kundendatei der Schlüsseldienst sich nochmals von K1 bestätigen lässt, dass der Eintrag tatsächlich gewünscht ist, um keine unnötigen Eintragungen vorzunehmen.

Den Identifikationscode IC nutzt K1 nun bei der nächsten Transaktion mit dem Schlüsseldienst, indem er SD den Identifikationscode unverschüsselt übersendet. Zweckmässigerweise erfolgt erst nach dieser zweiten Transaktion die endgültige Eintragung des Kunden K1 in die Kundendatenbank von SD. Durch die zusätzliche Verwendung eines Identifikationscodes, der nur einmal für die endgültige Eintragung des K1 in die Kundendatei verwendet und nicht elekronisch zugestellt wird, erhöht sich die Sicherheit, da K1 nun nicht mit seinem direkten Namen etc. in Verbindung mit dem Schlüsseldienst SD tritt, sondern bereits unter einem Codenamen.

Der Schlüsseldienst SD kreiert nun für K1 einen privaten Schlüssel und berechnet daraus einen öffentlichen Schlüssel, den der Schlüsseldienst SD dem K1 auf elektronischem Weg zustellt. Um die Sicherheit zu erhöhen, kann jedoch vorteilhafterweise bei jeder Transaktion des K1 mit dem Schlüsseldienst SD oder einem Lieferanten L1 der Schlüsseldienst SD einen neuen privaten Schlüssel und dann daraus einen neuen öffentlichen Schlüssel für den Kunden K1 generieren. Auch wenn ein ungebetener Lauscher den öffentlichen Schlüssel errät, so nutzt ihm dies für die nachfolgende Transaktion nichts, da dann bereits ein anderer öffentlicher Schlüssel verwendet wird.

Neben seinem Namen und seiner Adresse kann der Kunde K1 beispielsweise auch seine Kreditkartennummer, seinen persönlichen Fingerabdruck oder das Muster seiner Iris mit dem öffentlichen Schlüssel verschlüsseln und über das Netz dem Schlüsseldienst SD schicken, der die Daten mit dem privaten Schlüssel entschlüsselt und diese Daten in der Datenbank ablegt.

Nachdem nunmehr der Schlüsseldienst alle wichtigen Daten des Kunden K1, die insbesondere für die zu tätigenden Geschäfte zwischen dem Kunden K1 und einem oder mehreren Lieferanten L1-Ln erforderlich sind, gespeichet hat, eröffnet der Schlüsseldienst SD dem Kunden K1 den Zugang zu allen Lieferanten, mit dem der Schlüsseldienst zusammenarbeitet.

Dabei ist es denkbar, dass alle Geschäfte nur über den Schlüsseldienst SD abgewickelt werden, so dass der Kunde K1 seinen Wunsch, mit welchem Lieferanten L1 er zusammenarbeiten will, dem SD verschlüsselt mitteilt, der ihn entschlüsselt und daraufhin die Verbindung zwischen dem K1 und einem Lieferanten L1 herstellt.

Die gleiche Verschlüsselungstechnik, die für die Kunden verwendet worden ist, kann dabei auch für die Lieferanten gelten, wobei auch dem L1 jeweils ein privater und ein öffentlicher Schlüssel zugeordnet wird. Auch hier wird der private Schlüssel beim Schlüsseldienst SD abgelegt, während der öffentliche Schlüssel dem L1 zugestellt wird.

Es ist jedoch auch möglich, dass die Geschäfte direkt zwischen K1 und L1 abgewickelt werden, wobei L1 sich bei jeder Transaktion beim Schlüsseldienst vergewissert, ob es sich tatsächlich um den Kunden K1 handelt, als der sich die mit L1 in Verbindung getretene Person/Institut ausgibt. Nur wenn die wahre Identität des Kunden K1 geklärt ist, kann das geplante Geschäft abgewickelt werden. Einem Missbrauch durch einen Dritten, der sich als Kunde K1 ausgibt, um auf Kosten des K1 Geschäfte zu tätigen, ist damit vorgebeugt. So kann beispielsweise bei der ersten Aktion der Kunde K1 seinen Namen und seine Kreditkartennummer angeben. Um die Sicherheit zu erhöhen, wird zweckmässigerweise wie bereits ausgeführt diese erste Aktion nicht über den Lieferanten L1 abgewickelt, sondern der Kunde K1 tritt direkt mit dem Schlüsseldienst SD in Verbindung, der der Kreditkartennummer in Verbindung mit dem Namen des A einen privaten Schlüssel zuordnet, der wiederum einen öffentlichen Schlüssel generiert. Der öffentliche Schlüssel wird dem Kunden K1 zugestellt, der damit zukünfig die Kreditkartennummer verschlüsselt, so dass nur noch die verschlüsselte Kreditkartennummer über das Netz verschickt wird. Der Lieferant L1, der diese verschlüsselte Kreditkartennummer erhält, entschlüsselt sie jedoch nun nicht, sondern leitet sie an den Schlüsseldienst SD weiter. SD kennt den privaten Schlüssel zur Dechiffrierung der verschlüsselten Kreditkartennummer und sendet nach der Entschlüsselung die entschlüsselte Nummer an den Lieferanten L1, der nun sicher sein kann, es tatsächlich mit dem Kunden K1 zu tun zu haben, da nur dieser über den öffentlichen Schlüssel, der zu dem privaten Schlüssel korrespondiert, verfügt.

Eine Dechiffrierung von Nachrichten ist nur durch Manipulationen des Schlüsseldienstes SD möglich, so dass sichergestellt werden muss, dass es sich hier um eine absolut vertrauenswürdige Institution handelt. Dies ist jedoch eine politische und keine technische Frage.

Die Erfindung ermöglicht somit durch die Einbeziehung einer Dritten Partei die Übermittlung von Daten sicherer zu gestalten und insbesondere die Sicherheit von elektronisch abgewickelten Verkaufstransaktionen zu erhöhen.

## Patentansprüche

1. Verfahren zur Verschlüsselung von Daten D und Informationen, die auf elektronischem Weg über Dafenübertragungsmittel von einer Partei A an eine Partei B übermittelt werden, **dadurch gekennzeichnet,**
- **dass** die Partei A zunächst an einen Schlüsseldienst (SD) einen Datensatz DS unverschlüsselt übermittelt;
- und der Schlüsseldienst dem Datensatz DS einen privaten Schlüssel X zuordnet, der nur dem Schlüsseldienst (SD) bekannt ist;
- und aus diesem privaten Schlüssel X über einen in einer Richtung eineindeutigen Algorithmus ein öffentlicher Schlüssel Y generiert wird, der nur der Partei A zugestellt wird;
- und **dass** bei der nachfolgenden Übermittlung von Daten D von der Partei A an die Partei B der öffentliche Schlüssel Y zur Verschlüsselung der Daten D verwendet wird;
- und wobei die Partei B die verschlüsselten Daten Y(D) an den Schlüsseldienst (SD) schickt,
- und der Schlüsseldienst (SD) mit Hilfe des dem öffentlichen Schlüssel Y zugeordneten privaten Schlüssels X die Daten Y(D) entschlüsselt und die entschlüsselten Daten D an die Partei B sendet.

2. Verfahren nach Anspruch 1, **dadurch gekennzeichnet, dass** es sich bei der Partei A um einen Kunden und bei der Partei B um einen Lieferanten handelt.

3. Verfahren nach Anspruch 1 oder 2, **dadurch gekennzeichnet, dass** es sich bei dem Datensatz DS um ein die Partei A charakterisierendes Merkmal handelt.

4. Verfahren nach Anspruch 3, **dadurch gekennzeichnet, dass** es sich bei dem Datensatz DS um den Namen und /oder die Adresse der Partei A handelt.

5. Verfahren nach Anspruch 3, **dadurch gekennzeichnet, dass** es sich bei dem Datensatz DS um ein allgemeines Password, einen Fingerabdruck oder die Abbildung der Iris des Auges handelt, die der Partei A zugeordnet werden könnte.

6. Verfahren nach einem oder mehreren der Ansprüche 1 bis 5, **dadurch gekennzeichnet, dass** nach jeder Übermittlung der Daten Y(D) von der Partei A an den Schlüsseldienst (SD) der den Daten Y(D) zugeordnete private Schlüssel X vom Schlüsseldienst (SD) geändert wird, ein entsprechender neuer öffentlicher Schlüssel Y₂ generiert wird und dieser der Partei A für die nächste Übermittlung der Daten D mitgeteilt wird, so dass bei der nächsten Übermittlung von Daten D diese mit einem neuen öffentlichen Schlüssel Y₂ verschlüsselt werden und als Daten Y₂ (D) verschickt werden, von dem Schlüsseldienst (SD) mit dem privaten Schlüssel X₂ entschlüsselt werden und dann die entschlüsselten Daten D der Partei B zugestellt werden.

7. Verfahren nach einem oder mehreren der Ansprüche 1 - 6, **dadurch gekennzeichnet,**
- **dass** für die Übermittlung von Daten von der Partei B an die Partei A gleichfalls die Partei B zunächst einen Datensatz DS unverschlüsselt an den Schlüsseldienst (SD) übermittelt;
- wobei der Schlüsseldienst (SD) dem Datensatz DS einen privaten Schlüssel X zuordnet, der nur dem Schlüsseldienst (SD) bekannt ist;
- und aus diesem Privaten Schlüssel X über einen in einer Richtung eineindeutigen Algorithmus ein öffentlicher Schlüssel Y generiert wird, der nur der Partei B zugestellt wird und der bei der folgenden Übermittlung von Daten D von der Partei B an die Partei A zur Verschlüsselung der Daten D verwendet wird;
- wobei die Partei A nunmehr die verschlüsselten Daten Y(D) wiederum an den Schlüsseldienst (SD) schickt;
- und der Schlüsseldienst (SD) mit Hilfe des dem öffentlichen Schlüssel Y zugeordneten privaten Schlüssels X die Daten Y(D) entschlüsselt und die entschlüsselten Daten D an die Partei A sendet.

8. Verfahren nach einem oder mehreren der Ansprüche 1-7, **dadurch gekennzeichnet, dass** nach der ersten Kontaktaufnahme der Partei A und / oder der Partei B mit dem Schlüsseldienst (SD) eine erste Verschlüsselung von dem Schlüsseldienst (SD) an die Partei A bzw. die Partei B auf nichtelektronischem Weg zugesendet wird und dass die Partei A bzw. die Partei B die Verschlüsselung bei ihrer zweiten Kontaktaufnahme mit dem Schlüsseldienst (SD) verwendet.

9. Verfahren nach einem oder mehreren der Ansprüche 1-8, **dadurch gekennzeichnet, dass** die Partei A und /oder die Partei B und /oder der Schlüsseldienst (SD) mehrere Personen, Institutionen oder Organisationen sein können.

## Claims

1. Method to encrypt data D and information, transmitted electronically via telecommunication from a party A to a party B, **characterised as follows:**
- Party A first transmits a non-encrypted data set DS to a key supplier (KS);
- and that the key supplier (KS) associates the data set DS with a private key X, which is known only to the key supplier (KS);
- and that a public key Y is generated based on the private key X using a "one to one" unidirectional algorithm, then hands the public key Y exclusively to party A;
- and that the following transmission of data D from party A to party B the public key Y is used to encrypt the data D;
- and Party B sends the encrypted data Y(D) to the key supplier (KS);
- and the key supplier (KS) decrypts the data Y(D) by means of the private key X associated to the public key Y and sends the decrypted data D to party B.

2. The method is **characterised in** accordance with claim 1, by the fact that party A is a client and party B a supplier.

3. The method is **characterised in** accordance with claims 1 or 2, by the fact that the data set DS is a characteristic particular to party A.

4. The method is **characterised in** accordance with claim 3, by the fact that the data set DS is the name and/or the address of party A.

5. The method is **characterised in** accordance with claim 3, by the fact that the data set DS is a standard password, or biometric data, which is associated with party A.

6. The method is **characterised in** accordance with one or several of the claims 1 to 5, by the fact that after each transmission of data Y(D) from party A to the key supplier (KS), the key supplier changes the private key X. A corresponding new public key Y₂ is subsequently generated, which is communicated to party A for the next transmission of data D, in such a way that data D is encrypted with the new public key Y₂ and sent as data Y₂ (D). The key supplier (KS) decrypts the data Y₂ (D) by maens of the private key X₂ and the decrypted data D are passed on to party B.

7. The method is **characterised in** accordance with one or several of the claims 1 to 6, by the fact:
- That for transmission of data from party B to party A, party B first sends an non-encrypted data set DS to the key supplier (KS);
- where the key supplier (KS) associates to the data set DS with a private key X which is known only to the key supplier (KS);
- and based on the private key X the key supplier (KS) generates public key Y by use of a "one to one" unidirectional algorithm, then passes the public key Y exclusively to party B. The public key Y is used to encrypt data D at the time of next data transmission to party A;
- where party A subsequently sends the new encrypted data Y(D) to the key supplier (KS);
- and the key supplier (KS) decrypts the data Y(D) using the private key X which is associated with the public key Y and sends the decrypted data D to party A.

8. The method is **characterised in** accordance with one or several of the claims 1 to 7, by the fact that, after a first contact of party A and/or party B with the key supplier (KS), a first encryption by the key supplier (KS) is sent respectively to party A and/or party B by non electronic means, and that party A and party B respectively use the encryption at the time for their second contact with the key supplier (KS).

9. The method is **characterised in** accordance with one or several of the claims 1 to 8, by the fact that, party A and/or party B and/or the key supplier (KS) may be one or many persons, institutions, or organizations.

## Revendications

1. Procédé pour crypter des données D et des informations, transmises par voie électronique au moyen d'un système de télécommunication d'une partie A vers une partie B, **caractérisé par le fait:**
- **que** la partie A transmet d'abord à un fournisseur de clés (FC) un enregistrement EN non crypté;
- et **que** le fournisseur de clés (FC) associe à l'enregistrement EN une clé privée X, qui n'est connue que du fournisseur de clés (FC);
- et **que** se basant sur cette clé privée X, le fournisseur de clés (FC) génère une clé publique Y par un algorithme univoque unidirectionnel, puis remet la clé publique Y exclusivement à la partie A;
- et **que** lors de la transmission suivante de données D de la partie A à la partie B, la clé publique Y est employée pour crypter les données D;
- et où la partie B envoie les données cryptées Y(D) au fournisseur de clés (FC);
- et le fournisseur de clés (FC) décrypte les données Y(D) au moyen de la clé privée X associée à la clé publique Y et envoie les données décryptées D à la partie B.

2. Le procédé est **caractérisé** selon la revendication 1, par le fait que la partie A est un client et que la partie B est un fournisseur.

3. Le procédé est **caractérisé**, selon les revendications 1 ou 2, par le fait que l'enregistrement EN est une caractéristique particulière de la partie A.

4. Le procédé est **caractérisé**, selon la revendication 3, par le fait que l'enregistrement EN est le nom et/ou l'adresse de la partie A.

5. Le procédé est **caractérisé**, selon la revendication 3, par le fait que l'enregistrement EN est un mot de passe standard, une empreinte digitale ou l'image de l'iris d'un oeil, qui seraient associés à la partie A.

6. Le procédé est **caractérisé**, selon une ou plusieurs des revendications 1 à 5, par le fait qu'après chaque transmission de données Y(D) de la partie A au fournisseur de clés (FC), le fournisseur de clés (FC) transforme la clé privée X en une clé privée X₂, puis génère une nouvelle clé publique Y₂, qui est communiquée à la partie A pour la prochaine transmission de données D, de telle manière que les données D sont ensuite cryptées avec la nouvelle clé publique Y₂, puis les données Y₂(D) sont transmises, puis soumises au fournisseur de clés (FC). Le fournisseur de clés (FC) décrypte les données Y₂(D) au moyen de la clé privée X₂, puis les données décryptées D sont remises à la partie B.

7. Le procédé, selon une ou plusieurs des revendications 1 à 6, est **caractérisé par le fait:**
- **que** pour la transmission de données de la partie B à la partie A, la partie B envoie également d'abord un enregistrement EN non crypté au fournisseur de clés (FC);
- où le fournisseur de clé (FC) associe à l'enregistrement EN une clé privée X, qui n'est connue que du fournisseur de clé (FC);
- et basé sur cette clé privée X, le fournisseur de clés (FC) génère une clé publique Y par un algorithme univoque unidirectionnel, puis transmet la clé publique Y exclusivement à la partie B, et la clé publique Y est employée pour crypter les données D lors de la prochaine transmission à la partie A;
- où la partie A envoie à nouveau les données cryptées Y(D) au fournisseur de clé (FC);
- et le fournisseur de clés (FC) décrypte les données Y(D) au moyen de la clé privée X associée à la clé publique Y, puis envoie les données décryptées D à la partie A.

8. Le procédé, selon une ou plusieurs des revendications 1 - 7, est **caractérisé par le fait que**, après un premier contact de la partie A et/ou de la partie B avec le fournisseur de clés (FC) un premier cryptage du fournisseur de clés (FC) est envoyé à la partie A respectivement à la partie B par une voie non électronique et que la partie A respectivement la partie B utilise le cryptage lors de leur deuxième contact avec le fournisseur de clés (FC).

9. Le procédé, selon une ou plusieurs des revendications 1 - 8, est **caractérisé par le fait que**, la partie A et / ou la partie B et / ou le fournisseur de clés (FC) peuvent être plusieurs personnes, institutions ou organisations.
